# EUROPEAN PATENT APPLICATION

(11) **EP 3 587 049 A1**
(43) Date of publication of application: **01.01.2020**
(21) Application number: 19181643.8
(22) Date of filing: 21.06.2019
(51) Int. Cl.: B25J 9/16, B25J 13/08

(54) **CONTROL APPARATUS, ROBOT, AND ROBOT SYSTEM**

(30) Priority: 25.06.2018 JP 2018119541
(71) Applicant: Seiko Epson Corporation, Tokyo 160-8801 (JP)
(72) Inventor: Adachi, Hiroki, Nagano, 392-8502 (JP); Kawai, Hiroki, Nagano, 392-8502 (JP)
(74) Representative: Hoffmann Eitle

(57) **Abstract**

A control apparatus includes a control unit that controls a movable unit in a specific control mode in which the movable unit is moved in an amount of movement input by a user according to input detected by an input detection unit in teaching of a robot. The input detection unit includes at least one of an electromagnetic sensor, a thermal sensor, a capacitance sensor, a magnetic sensor, an angular velocity sensor, an acceleration sensor, an ultrasonic sensor, and a current sensor.

## Description

The present application is based on, and claims priority from JP Application Serial Number 2018-119541, filed June 25, 2018, the disclosure of which is hereby incorporated by reference herein in its entirety.

### BACKGROUND

### 1. Technical Field

The present disclosure relates to a control apparatus of a robot, robot, and robot system.

### 2. Related Art

As a mode for facilitating teaching work by a robot, a direct teaching mode in which a teacher directly holds fingers of a robot and operating the finger position of the robot is known. In the direct teaching mode, the robot can be continuously and largely moved, however, fine positioning is difficult only by the continuous movement. In JP-A-2017-164876 disclosed by the applicant of the present application, a technique of fine positioning using a mode in which the robot is moved according to an external force in a predetermined direction in a predetermined amount is described.

JP-A-2017-164876 is an example of the related art.

However, in the above described related art, a form and a method of input for a mode in which the robot is moved in a small predetermined amount is not sufficiently considered.

### SUMMARY

According to an aspect of the present disclosure, a control apparatus that controls a robot including a movable unit and an input detection unit provided in the movable unit is provided. The control apparatus includes a control unit that controls the movable unit in a specific control mode in which the movable unit is moved in an amount of movement input by a user according to input detected by the input detection unit in teaching of the robot. The input detection unit includes at least one of an electromagnetic sensor, a thermal sensor, a capacitance sensor, a magnetic sensor, an angular velocity sensor, an acceleration sensor, an ultrasonic sensor, and a current sensor.

### BRIEF DESCRIPTION OF THE DRAWINGS

FIG. 1 is a perspective view of an example of a robot system.
FIG. 2 is a conceptual diagram showing an example of a control apparatus having a plurality of processors.
FIG. 3 is a conceptual diagram showing another example of a control apparatus having a plurality of processors.
FIG. 4 is a functional block diagram of a robot and the control apparatus.
FIG. 5 is an explanatory diagram showing a relationship between input and an amount of movement in a specific control mode.
FIG. 6A is an explanatory diagram showing an input example using a pressure sensor.
FIG. 6B is an explanatory diagram showing an input example using the pressure sensor.
FIG. 6C is an explanatory diagram showing an input example using the pressure sensor.
FIG. 6D is an explanatory diagram showing an input example using the pressure sensor.
FIG. 7 is a perspective view of an example of a robot system including another type of input detection unit.
FIG. 8 is an explanatory diagram showing an example of an input window for parameter settings of the specific control mode.
FIG. 9 is a graph showing an example of types of input and movement of a movable unit.
FIG. 10 is a flowchart of teaching processing in an embodiment.

### DESCRIPTION OF EXEMPLARY EMBODIMENTS

### A. First Embodiment

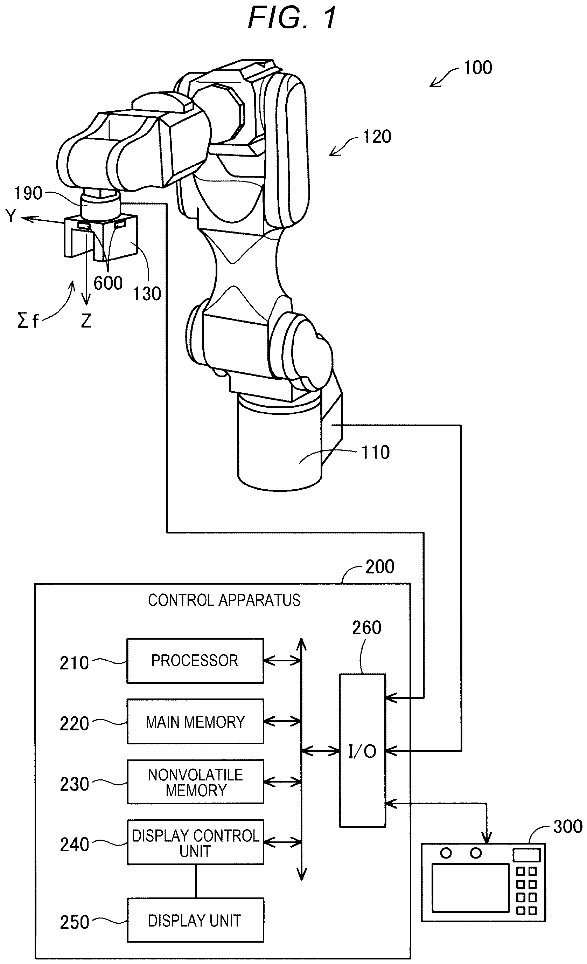

FIG. 1 is the perspective view showing the example of the robot system. The robot system includes a robot 100, a control apparatus 200, and a teaching apparatus 300. The control apparatus 200 is communicably connected to the robot 100 and the teaching apparatus 300 via cables or wireless connection.

The robot 100 has a base 110 and an arm 120. A force detection unit 190 is provided in the distal end of the arm 120, and an end effector 130 is attached to the distal end side of the force detection unit 190. As the end effector 130, any type of end effector may be used. In the example of FIG. 1, for convenience of illustration, the end effector 130 is drawn in a simple shape. The arm 120 includes a plurality of joints. The position near the distal end of the arm 120 can be set as a tool center point (TCP). The TCP is a position used as a reference of the position of the end effector 130, and can be set in an arbitrary position. In this specification, the arm 120 and the end effector 130 are collectively referred to as "movable unit".

An input detection unit 600 that detects other input than force is provided in the end effector 130. The input detection unit 600 is used for detection of input for execution of control in a specific control mode in which the movable unit is moved in a predetermined amount of movement. It is preferable that the input detection unit 600 includes one or more sensors. The input detection unit 600 will be further described later.

The control apparatus 200 has a processor 210, a main memory 220, a nonvolatile memory 230, a display control unit 240, a display unit 250, and an I/O interface 260. These respective parts are connected via a bus. The processor 210 is e.g. a microprocessor or processor circuit. The control apparatus 200 is connected to the robot 100 and the teaching apparatus 300 via the I/O interface 260. Note that the control apparatus 200 may be housed inside of the robot 100.

As the configuration of the control apparatus 200, various other configurations than the configuration shown in FIG. 1 can be employed. For example, the processor 210 and the main memory 220 may be removed from the control apparatus 200 in FIG. 1 and the processor 210 and the main memory 220 may be provided in another apparatus communicably connected to the control apparatus 200. In this case, the entire apparatus including the other apparatus and the control apparatus 200 functions as the control apparatus of the robot 100. In another embodiment, the control apparatus 200 may have two or more processors 210. In yet another embodiment, the control apparatus 200 may be realized by a plurality of apparatuses communicably connected to one another. In these various embodiments, the control apparatus 200 is configured as an apparatus or apparatus group including one or more processors 210.

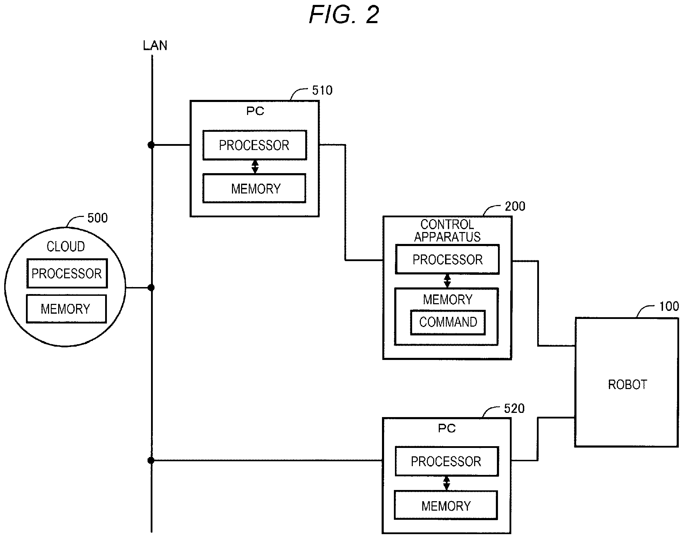

FIG. 2 is the conceptual diagram showing the example in which the control apparatus of the robot includes the plurality of processors. In this example, in addition to the robot 100 and the control apparatus 200, personal computers 400, 410 and a cloud service 500 provided via a network environment such as LAN are illustrated. Each of the personal computers 400, 410 includes a processor and a memory. Further, a processor and a memory are available in the cloud service 500. The control apparatus of the robot 100 can be realized using part or all of these plurality of processors.

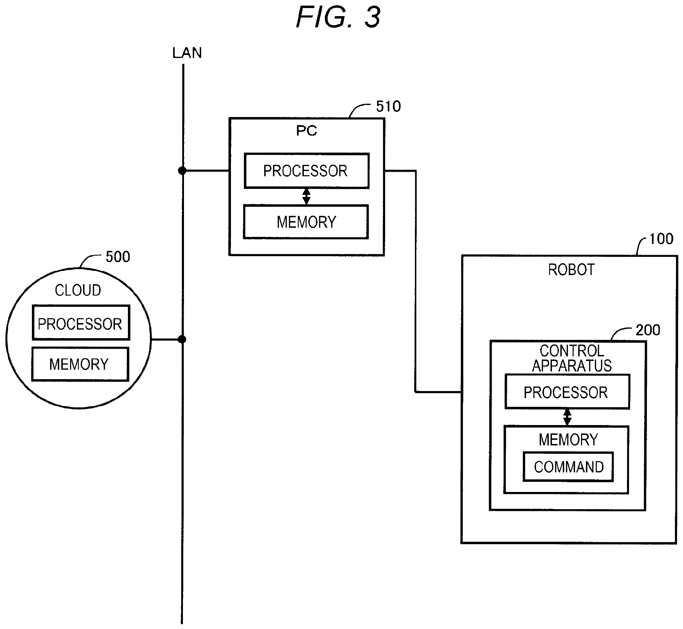

FIG. 3 is the conceptual diagram showing another example in which the control apparatus of the robot includes a plurality of processors. This example is different from that in FIG. 2 in that the control apparatus 200 of the robot 100 is housed in the robot 100. Also, in this example, the control apparatus of the robot 100 can be realized using part or all of the plurality of processors.

The teaching apparatus 300 is used for creation of control programs (teaching data) for work of the robot 100. The teaching apparatus 300 is also called "teaching pendant". In place of the teaching pendant, a personal computer with an application program for teaching processing installed therein can be used.

The force detection unit 190 is a six-axis force sensor that measures external forces applied to the end effector 130. The force detection unit 190 has three detection axes X, Y, Z orthogonal to one another in a sensor coordinate system ∑f as an intrinsic coordinate system, and detects magnitude of forces parallel to the respective detection axes and magnitude of torque (moment of forces) about the respective detection axes. The force parallel to the each detection axis is referred to as "translational force". Further, the torque about each detection axis is referred to as "rotational force" . In this specification, the word "force" is used in a meaning including both the translational force and the rotational force.

The force detection unit 190 is not necessarily a sensor that detects forces along the six axes, but a sensor that detects forces in the smaller number of directions may be used. Or, the force detection unit 190 is not provided in the distal end of the arm 120, but a force sensor as a force detection unit may be provided in one or more joints of the arm 120. Note that the force detection unit may be omitted. In this case, control in a first control mode, which will be described later, is not executed.

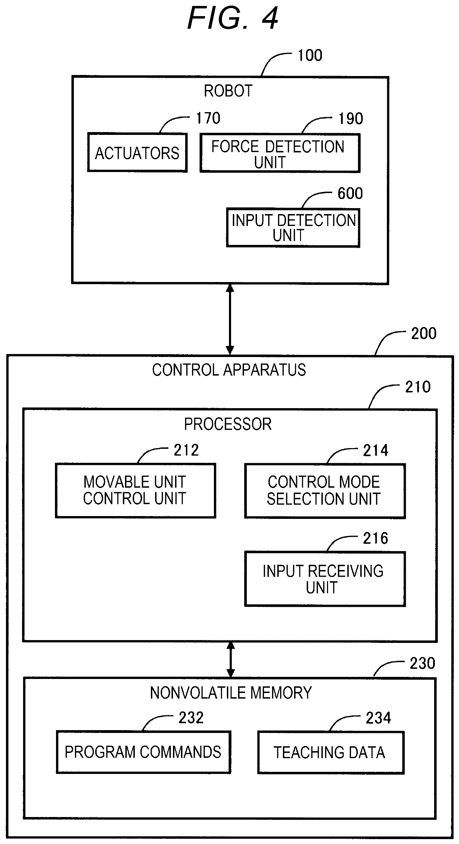

FIG. 4 is the block diagram showing the functions of the robot 100 and the control apparatus 200. The robot 100 has a plurality of actuators 170 for driving the plurality of joints in addition to the above described force detection unit 190 and input detection unit 600. The processor 210 of the control apparatus 200 executes a program command 232 stored in the nonvolatile memory 230 in advance, and thereby, realizes functions of a movable unit control unit 212, a control mode selection unit 214, and an input receiving unit 216. The movable unit control unit 212 controls the actuators 170 to move the arm 120. The control mode selection unit 214 selects the first control mode or a second control mode, which will be described later, according to the input detected by the force detection unit 190 or input detection unit 600. The control of the arm 120 in the first control mode and the second control mode is executed by the movable unit control unit 212. The processor 210 that executes the functions of the movable unit control unit 212 and the control mode selection unit 214 corresponds to "control unit". Teaching data 234 created by teaching processing is stored in the nonvolatile memory 230. Note that part or all of the functions of the movable unit control unit 212, the control mode selection unit 214, and the input receiving unit 216 may be realized using a hardware circuit.

In the teaching processing, a plurality of control modes including the first control mode and the second control mode described as below are available.

### First Control mode

The first control mode is a mode in which the arm 120 is continuously moved according to the force detected by the force detection unit 190. The first control mode is a mode, the so-called direct teaching, and, when the user applies a force while holding the end effector 130, the arm 120 smoothly moves according to the force. In this regard, the control apparatus 200 executes compliance control as a kind of force control to move the arm 120. The compliance control in the direct teaching is control to move the arm 120 based on predetermined force control parameters (mass M, viscosity coefficient D, elasticity coefficient K in the equation of motion). The movement in the first control mode is also referred to as "continuous movement".

### Second Control Mode

The second control mode is a mode in which the arm 120 is moved in a predetermined amount of movement according to the input detected by the input detection unit 600. The amount of movement is set by the user's input. The second control mode corresponds to "specific control mode". The amount of movement in the second control mode is set to e.g. a small amount of translation (amount of translational movement) from 0.1 mm to 1 mm for translational movement and set to e.g. a small rotation angle (amount of rotational movement) from 0.1 degrees to 3 degrees for rotation. In this manner, fine adjustment of the positions of the end effector 130 and the TCP can be made. The movement in the second control mode is also referred to as "fixed-amount movement".

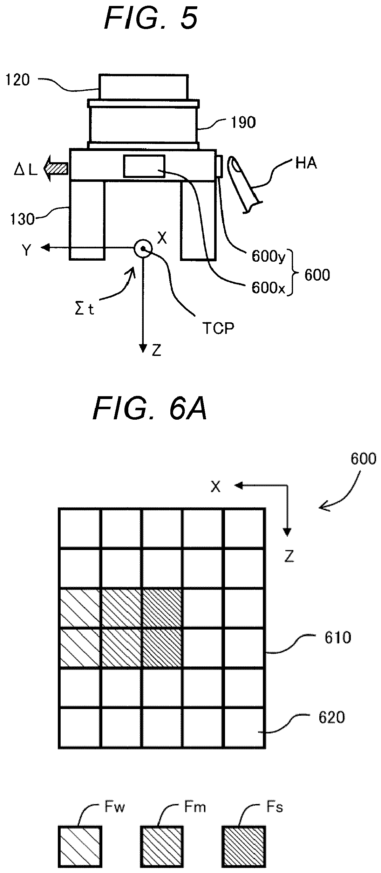

FIG. 5 is the explanatory diagram showing the relationship between the input and the amount of movement in second control mode. In this example, the input detection unit 600 includes an input detection unit 600x for X-axis direction and an input detection unit 600y for Y-axis direction. That is, the input detection unit 600x for X-axis direction is provided at a surface perpendicular to an X-axis direction of a tool coordinate system ∑t of the surfaces of the end effector 130, and the input detection unit 600y for Y-axis direction is provided at a surface perpendicular to a Y-axis direction of the tool coordinate system ∑t. When the user makes input to the input detection unit 600x for X-axis direction using a hand HA or the like, the movable unit moves in the X-axis direction in a predetermined small amount of movement ΔL. On the other hand, when the user makes input to the input detection unit 600y for Y-axis direction using the hand HA or the like, the movable unit moves in the Y-axis direction in the predetermined small amount of movement ΔL.

Note that, for moving the movable unit in a Z-axis direction, an input detection unit for Z-axis direction may be provided. Or, an input detection unit for rotating the movable unit around the X-axis, Y-axis, or Z-axis in a small amount of rotation may be provided. Also, in this case, it is preferable to provide input detection units exclusive for the respective axes as input detection units for rotation.

As the input detection unit 600, for example, the following various sensors can be used.
(1) Non-contact Sensor
(2) Pressure Sensor
(3) Inertial Sensor
(4) Rotary Dial

As the non-contact sensor, a proximity sensor that detects input to the non-contact sensor when an object such as the hand HA comes close at a distance equal to or smaller than a predetermined distance threshold value from the non-contact sensor can be used. The distance threshold value can be set to e.g. from 10 mm to 100 mm. As the proximity sensor, e.g. an optical proximity sensor using a photo reflector, a capacitance proximity sensor, or the like can be used. Further, the non-contact sensor may be realized using an electromagnetic sensor such as a photosensor, a thermal sensor, a magnetic sensor, an ultrasonic sensor, or the like. When the non-contact sensor is used as the input detection unit 600, a plurality of non-contact sensors are preferably provided for a plurality of movement directions of the movable unit. Accordingly, the movable unit can be moved in a desired movement direction of the plurality of movement directions.

FIGS. 6A to 6D are the explanatory diagrams showing relationships between the input and the movement direction in the input detection unit 600 using a pressure sensor. The input detection unit 600 is a pressure sensor having an input surface 610 at which a plurality of pressure detection elements 620 are placed in a planar arrangement, and can detect a pressure distribution on the input surface 610. The control unit can determine the movement direction of the movable unit in the specific control mode according to the pressure distribution on the input surface 610. The pressure sensor may be realized using a capacitance sensor.

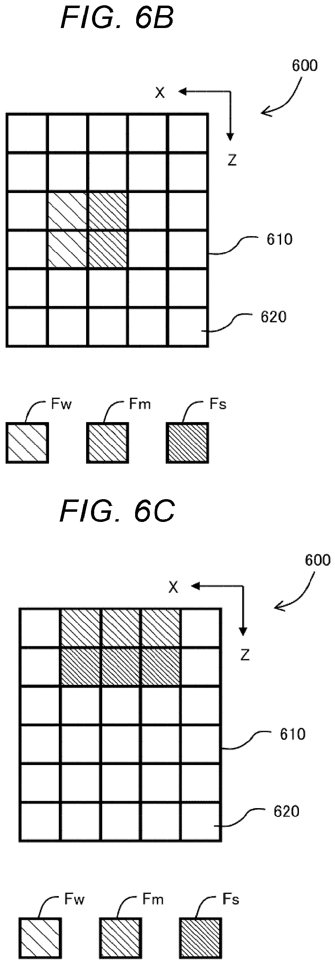

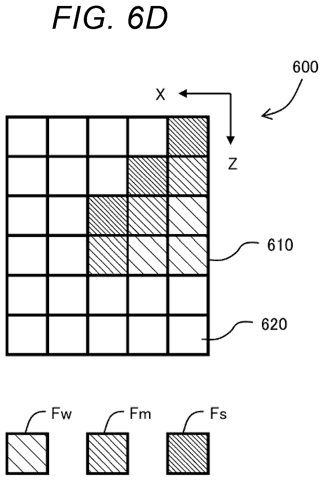

In FIGS. 6A to 6D, pressures applied to the individual pressure detection elements 620 are classified into three of strong pressure Fs, middle pressure Fm, and weak pressure Fw, and these pressures Fs, Fm, Fw are distinguished by differences in hatching of the pressure detection elements 620. FIG. 6A shows an example of a pressure distribution for moving the movable unit in the X-axis direction in a predetermined amount of movement. FIG. 6B shows an example of a pressure distribution for moving the movable unit in the X-axis direction in a smaller amount of movement than that in FIG. 6A. FIG. 6C shows an example of a pressure distribution for rotating the movable unit in a pivot direction about the X-axis in a predetermined amount of rotation. FIG. 6D shows an example of a pressure distribution for rotating the movable unit in a pivot direction about the Z-axis in a predetermined amount of rotation. As is understood from these examples, the movement direction of the movable unit in the specific control mode may be determined according to the pressure distribution on the input surface 610. In this manner, the movement direction of the movable unit in the specific control mode may be changed according to the pressure distribution, and thereby, the user can move the movable unit in a desired movement direction. Note that FIGS. 6A to 6D are just the examples and various other patterns can be used as the pressure distribution patterns. In the input detection unit 600 using the pressure sensor, detection of the pressure distributions shown in FIGS. 6A to 6D as input corresponds to "detection of other input than force".

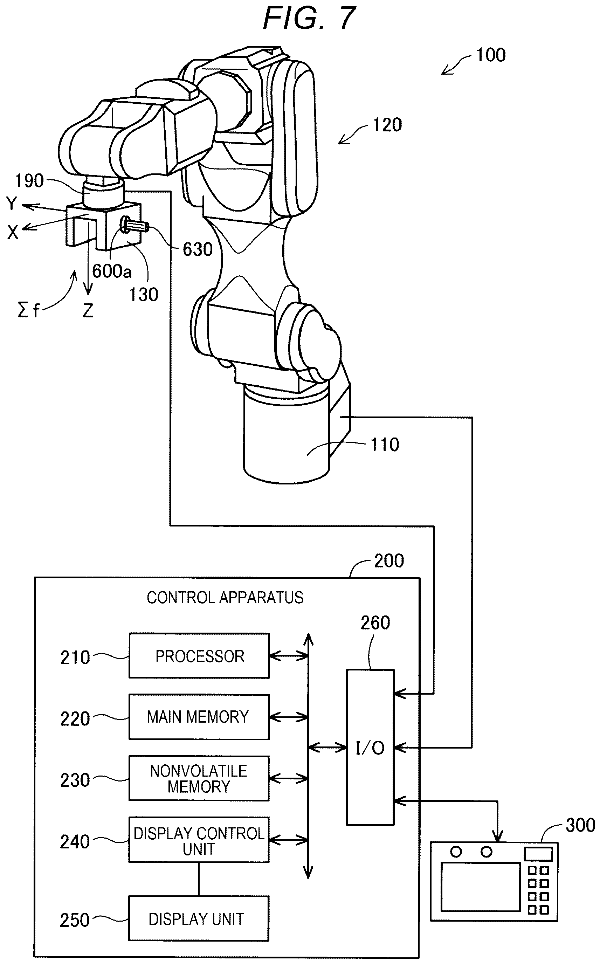

FIG. 7 is a perspective view showing another example of the robot system including an input detection unit. In this example, an input detection unit 600a including a rotary dial 630 is used. The user can execute movement of the movable unit in the specific control mode by turning the rotary dial 630 with a hand. Note that the amount of rotation of the rotary dial 630 is detected by e.g. a rotary encoder (not shown) of the input detection unit 600a. It is preferable that the input detection unit 600a is adapted to switch the movement direction in the specific control mode by pressing the rotary dial 630 or pressing a button (not shown) . The rotary dial 630 may be realized using an electromagnetic sensor, magnetic sensor, or the like.

As the input detection unit 600, an inertial sensor can be used. The inertial sensor may be realized using an angular velocity sensor, acceleration sensor, or the like. The inertial sensor is also called IMU (Inertial Measurement Unit), and detects angles or angular velocities and accelerations in directions of a plurality of axes. Note that the inertial sensor itself is a sensor that detects motion and, when the inertial sensor is used as the input detection unit 600, a specification switch for switching the control mode to the specific control mode may be provided in the movable unit. The control mode is switched to the specific control mode by the specification switch, then, a force is applied to the end effector 130, and thereby, input is detected by the inertial sensor and movement of the movable unit in the specific control mode is executed. Further, the movement direction of the movable unit is determined according to the directions of the angular velocities and accelerations detected by the inertial sensor.

As the input detection unit 600, further, a magnetic sensor can be used. The input to the magnetic sensor may be made by e.g. contacting the magnetic sensor with a hand wearing a glove with magnet. The input detection unit 600 using the magnetic sensor can be provided at the surface of the end effector 130 as shown in FIGS. 1 and 5. Or, the magnetic sensor may be provided at the flange of the arm 120 or the flange of the force detection unit 190. In this case, a plurality of magnetic sensors may be provided in a plurality of positions corresponding to the plurality of movement directions in the specific control mode. Or, a continuous magnetic sensor may be provided around the end effector 130 or the flange. In the latter case, for example, the movement direction of the movable unit may be determined according to e.g. a method of contacting the magnetic sensor. For example, the plurality of movement directions of the movable unit may be associated with a plurality of different actions including rubbing, twisting, and pressing the magnetic sensor. In this manner, the movable unit can be moved in a desired movement direction according to the way of contacting the magnetic sensor.

As the input detection unit, further, a current sensor can be used. For example, a current sensor that detects the current value of the actuator 170 of the arm 120 may be used as the input detection unit. In this case, a specification switch for switching the control mode to the specific control mode may be provided in the movable unit. Note that all of the above described other types of input detection units may be provided at the surface of the movable unit, however, it is hard to provide the current sensor at the surface of the movable unit. In view of the ease of input, it is preferable to provide the input detection unit at the surface of the movable unit.

As described above, as the input detection unit that detects input for the specific control mode, various configurations that detect other input than force can be used. Particularly, the input detection unit is provided at the surface of the movable unit, and thereby, the user can easily make input for the specific control mode. The input detection unit can be adapted to include one or more sensors, and may be formed to include a plurality of sensors.

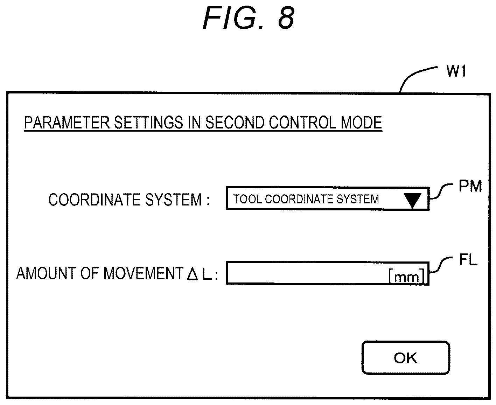

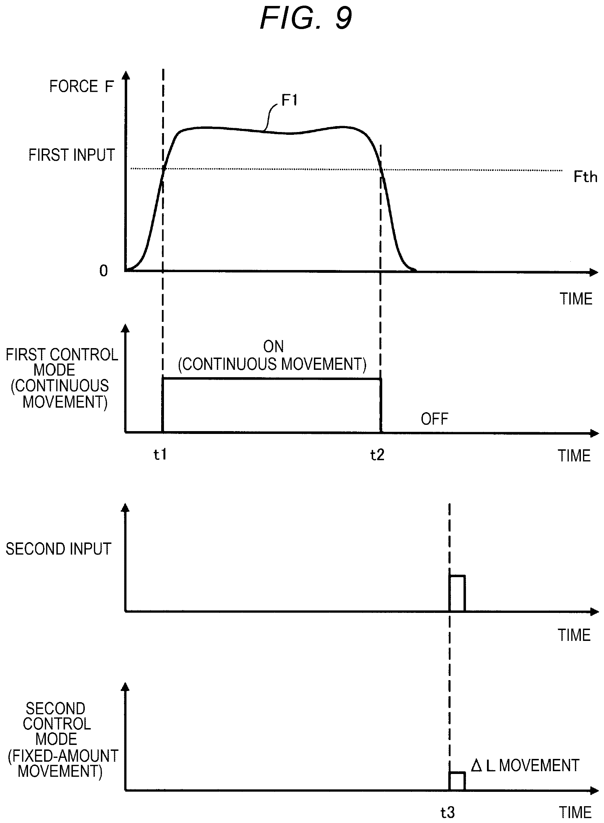

FIG. 8 is an explanatory diagram showing a window W1 for setting various parameters of the second control mode. The window W1 is an input window displayed on the display unit 250 of the control apparatus 200. The parameters set in the window W1 are received by the input receiving unit 216 of the control apparatus 200. Here, a pulldown menu PM for selection of the coordinate system of the direction in which the movable unit moves in the second control mode and a field FL for inputting the amount of movement ΔL are provided. In the example of FIG. 9, the tool coordinate system is selected as the coordinate system of the movement direction. Note that the amount of rotation may be set as the amount of movement. In this manner, as the parameters used for control in the second control mode as the specific control mode, input of the parameters including the amount of movement ΔL is received from the user, and thereby, the form of movement in the specific control mode can be set according to the preference of the user.

FIG. 9 is a graph showing an example of control in the first control mode in which the movable unit is moved according to first input detected by the force detection unit 190 and control in the second control mode in which the movable unit is moved according to second input detected by the input detection unit 600. In this example, at times t1 to t2, a force F1 equal to or larger than a force threshold value Fth is detected by the force detection unit 190. In the period from times t1 to t2, the control in the first control mode is executed and the movable unit moves according to the detection of the force F1. As described above, the first control mode is the so-called direct teaching mode, and the end effector 130 smoothly moves in a direction in which the user applies a force to the end effector gripped by the user.

On the other hand, at time t3, the second input is detected by the input detection unit 600, and the movable unit moves in the small amount of movement ΔL according to the detection of the second input.

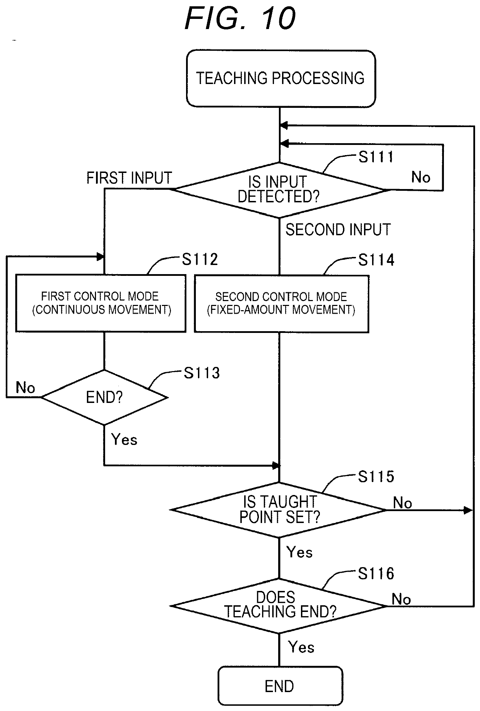

FIG. 10 is the flowchart of teaching processing in the embodiment. The teaching processing is executed by the movable unit control unit 212 and the control mode selection unit 214 of the control apparatus 200 when the robot 100 is set in the teaching mode by the teaching apparatus 300.

At step S111, the apparatus waits until input is detected by the force detection unit 190 or the input detection unit 600. If the input is detected at step S111, the control mode selection unit 214 selects a control mode according to whether the detected input is the first input or the second input. That is, when a force as the first input is detected by the force detection unit 190, the first control mode is selected and the processing moves to step S112. The control in the first control mode by the movable unit control unit 212 is continued until ending of the first control mode is determined at the next step S113, and then, the processing moves to step S115. On the other hand, when the second input is detected by the input detection unit 600 at step S111, the second control mode is selected and the processing moves to step S114, the movable unit control unit 212 executes the fixed-amount movement in the second control mode, and then, the processing moves to step S115. At step S115, the control apparatus 200 determines whether or not a taught point is set by the teaching apparatus 300. When no taught point is set, the processing returns to step S111, and the above described steps S111 to S115 are repeated until the movable unit reaches appropriate position and posture. On the other hand, when the movable unit reaches the appropriate position and posture, the taught point is set at step S115. That is, the position of the movable unit is employed as a taught position according to the input from the teaching apparatus 300. When the taught point is set at step S115, the processing moves to step S116, and whether or not the teaching processing ends is determined. When the teaching processing does not end, the processing returns to step S111. Note that, for example, an instruction to end the teaching processing may be given by the user using the teaching apparatus 300.

As described above, in the first embodiment, the control of the movable unit is executed in the specific control mode in which the movable unit is moved in a predetermined amount of movement according to the input detected by the input detection unit 600. Further, as the input detection unit 600, a sensor that detects other input than force or the like is used. Therefore, movement of the movable unit in the specific control mode can be executed using the input detection unit 600 that detects other input than force.

### B. Other Embodiments:

The present disclosure is not limited to the above described embodiment, but may be realized in various aspects without departing from the scope thereof. For example, the present disclosure can be realized in the following aspects. The technical features in the above described embodiment corresponding to technical features in the following respective aspects can be appropriately replaced or combined for solving part or all of the problems of the present disclosure or achieving part or all of the effects of the present disclosure. Further, the technical features can be appropriately deleted unless the technical features are described as essential features in this specification.
(1) According to a first aspect of the present disclosure, a control apparatus that controls a robot including a movable unit and an input detection unit provided in the movable unit is provided. The control apparatus includes a control unit that controls the movable unit in a specific control mode in which the movable unit is moved in an amount of movement input by a user according to input detected by the input detection unit in teaching of the robot. The input detection unit includes at least one of an electromagnetic sensor, a thermal sensor, a capacitance sensor, a magnetic sensor, an angular velocity sensor, an acceleration sensor, an ultrasonic sensor, and a current sensor.
   According to the control apparatus, the movement of the movable unit in the specific control mode can be executed using the input detection unit including the sensor that detects other input than force.
(2) The control apparatus may include an input receiving unit that receives input of the amount of movement from the user.
   In the configuration, the form of movement in the specific control mode can be set according to the preference of the user.
(3) In the control apparatus, the input detection unit may include at least one non-contact sensor of the electromagnetic sensor, the thermal sensor, the magnetic sensor, and the ultrasonic sensor.
(4) In the control apparatus, the input detection unit may include a plurality of the non-contact sensors provided in a plurality of positions corresponding to a plurality of movement directions of the movable unit.
   In the configuration, the movement direction of the movable unit in the specific control mode may be designated using the plurality of non-contact sensors.
(5) In the control apparatus, the non-contact sensor may detect input to the non-contact sensor when an object comes close at a predetermined distance or less from 10 mm to 100 mm from the non-contact sensor.
   In the configuration, the movement in the specific control mode may be executed only by moving a hand or the like close to the non-contact sensor.
(6) According to a second aspect of the present disclosure, a robot controlled by a control unit is provided. The robot includes a movable unit and an input detection unit provided in the movable unit, and the movable unit is controlled by the control unit in a specific control mode in which the movable unit is moved in an amount of movement input by a user according to input detected by the input detection unit in teaching of the robot. The input detection unit includes at least one of an electromagnetic sensor, a thermal sensor, a capacitance sensor, a magnetic sensor, an angular velocity sensor, an acceleration sensor, an ultrasonic sensor, and a current sensor.
   According to the robot, the movement of the movable unit in the specific control mode can be executed using the input detection unit including the sensor that detects other input than force.
(7) According to a third aspect of the present disclosure, a robot system including a robot including a movable unit and an input detection unit provided in the movable unit, and one of the above described control apparatuses is provided.

According to the robot system, the movement of the movable unit in the specific control mode can be executed using the input detection unit including the sensor that detects other input than force.

The present disclosure can be realized in various other aspects than the above described aspects, e.g. a robot system including a robot and a robot control apparatus, a computer program for realizing functions of a robot control apparatus, a non-transitory storage medium with the computer program recorded therein, or the like.

## Claims

1. A control apparatus that controls a robot including a movable unit and an input detection unit provided in the movable unit, comprising
a control unit that controls the movable unit in a specific control mode in which the movable unit is moved in an amount of movement input by a user according to input detected by the input detection unit in teaching of the robot, wherein
the input detection unit includes at least one of an electromagnetic sensor, a thermal sensor, a capacitance sensor, a magnetic sensor, an angular velocity sensor, an acceleration sensor, an ultrasonic sensor, and a current sensor.

2. The control apparatus according to claim 1, further comprising an input receiving unit that receives input of the amount of movement from the user.

3. The control apparatus according to claims 1 or 2, wherein
the input detection unit includes at least one non-contact sensor of the electromagnetic sensor, the thermal sensor, the magnetic sensor, and the ultrasonic sensor.

4. The control apparatus according to claim 3, wherein the input detection unit includes a plurality of the non-contact sensors provided in a plurality of positions corresponding to a plurality of movement directions of the movable unit.

5. The control apparatus according to claims 3 or 4, wherein
the non-contact sensor detects input to the non-contact sensor when an object comes close at a predetermined distance or less from 10 mm to 100 mm from the non-contact sensor.

6. A robot controlled by a control unit, comprising:
a movable unit; and
an input detection unit provided in the movable unit, wherein
the movable unit is controlled by the control unit in a specific control mode in which the movable unit is moved in an amount of movement input by a user according to input detected by the input detection unit in teaching of the robot, and
the input detection unit includes at least one of an electromagnetic sensor, a thermal sensor, a capacitance sensor, a magnetic sensor, an angular velocity sensor, an acceleration sensor, an ultrasonic sensor, and a current sensor.

7. A robot system comprising:
a robot including a movable unit and an input detection unit provided in the movable unit; and
the control apparatus according to claims 1 or 2.
